# EUROPÄISCHE PATENTSCHRIFT

(11) **EP 3 401 556 B1**
(45) Veröffentlichungstag und Bekanntmachung des Hinweises auf die Patenterteilung: **08.01.2020**
(21) Anmeldenummer: 18158595.1
(22) Anmeldetag: 26.02.2018
(51) Int. Cl.: F16B 12/20

(54) **FRONTBLENDEN-VERBINDUNGSBESCHLAG**
FRONT PANELS CONNECTION FITTING
CONNECTION DE PANNEAUX FRONTAUX

(30) Priorität: 09.05.2017 DE 202017102763 U
(43) Veröffentlichungstag der Anmeldung: 14.11.2018
(73) Patentinhaber: Anton Schneider GmbH & Co KG, 79341 Kenzingen (DE)
(72) Erfinder: WEBER, Heimo, 79194 Gundelfingen (DE)
(74) Vertreter: Kohler Schmid Möbus Patentanwälte

(56) Entgegenhaltungen:
- EP-A1- 0 698 357
- DE-A1-102007 039 595
- DE-U1- 9 216 182

## Beschreibung

Die Erfindung betrifft einen Verbindungsbeschlag gemäß dem Oberbegriff von Anspruch 1, sowie auch ein Möbel, insbesondere eine Frontblende, mit einem daran befestigten Verbindungsbeschlag.

Ein derartiger Verbindungsbeschlag ist beispielsweise durch die EP 0 698 357 A1 bekannt geworden.

Dieser bekannte Verbindungsbeschlag für Möbelteile umfasst einen Spreizdübel mit einem Spreizbolzen sowie einen Beschlagkörper, der als Halteteil einer Frontblendenbefestigung ausgeführt ist. Der Spreizbolzen ist mittels eines Achsstifts drehbar am Beschlagkörper gelagert und durch Kippen des Beschlagkörpers in die Spreiz- bzw. Lösestellung bringbar. Der Beschlagkörper weist eine am Spreizdübel abrollende Exzenterfläche auf, so dass beim Kippen des Beschlagkörpers der Spreizbolzen innerhalb des Spreizdübels verschoben und dadurch der Spreizdübel aufgespreizt wird. Der Verbindungsbeschlag weist somit insgesamt vier Teile auf, nämlich Spreizdübel, Beschlagkörper, Spannbolzen und Achsstift. Da der Achsstift in eine Bohrung des Spreizbolzens eingepresst werden muss, ist der Zusammenbau des Verbindungsbeschlags nur mit hohem Aufwand möglich.

Der vorliegenden Erfindung liegt demgegenüber die Aufgabe zugrunde, bei einem Verbindungsbeschlag der eingangs genannten Art die Anzahl der Teile zu reduzieren und den Zusammenbau zu vereinfachen.

Diese Aufgabe wird erfindungsgemäß dadurch gelöst, dass das zweite Beschlagteil auf dem mindestens einen Bolzenkopf verrastet ist.

Erfindungsgemäß sind die beiden Beschlagteile unverlierbar miteinander verbunden. Das Festspannen bzw. Spreizen erfolgt werkzeuglos mit dem zweiten Beschlagteil, das zugleich das Haltemittel für das zweite Bauteil bildet, so dass kein zusätzliches Werkzeug zum Herbeiführen oder Lösen der Verbindung erforderlich ist. Der erfindungsgemäße Spannverbinder besteht somit nur aus drei Teilen, nämlich den beiden Beschlagteilen und dem Spannbolzen.

Besonders bevorzugt weist das erste Beschlagteil mindestens zwei parallele Spreizdübel mit jeweils einem Spreizbolzen auf, wobei das zweite Beschlagteil auf den mindestens zwei Bolzenköpfen schwenkbar zwischen der Ausgangs- und der Spannstellung gelagert ist. Die beiden Spreizdübel können über eine Platte miteinander verbunden sein, die vorteilhaft einen Tiefenanschlag beim Einsetzen der Spreizdübel in eine Bohrung ausbildet.

Vorzugsweise ist der mindestens eine Bolzenkopf halbkugel- oder halbzylinderförmig ausgebildet.

Die Spannkontur des zweiten Beschlagteils kann durch eine bezüglich der Schwenkachse exzentrische Außenkontur oder eine bezüglich der Schwenkachse exzentrisch ausgebildete Lagerfläche gebildet sein. In jedem Fall nimmt der Abstand der exzentrischen Spannkontur zur Schwenkachse entgegen der Spannrichtung bis zu einer Anlagefläche zu, und zwar kontinuierlich oder über eine Kante, um so das zweite Beschlagteil in der Spannstellung zu sichern. Zusätzlich oder alternativ kann eine Selbstsicherung des zweiten Beschlagteils auch durch ein Überspannen kurz vor der Spannstellung erfolgen.

Vorteilhaft weist die Lagerfläche einen sich in Schwenkrichtung erstreckenden, randoffenen Schlitz für einen Bolzenschaft des Spreizbolzens auf. Dabei kann der Schlitz eine elastisch aufweitbare Engstelle aufweisen, deren Schlitzbreite geringfügig kleiner als der Durchmesser des Bolzenschafts ist. Der Bolzen wird unter Aufweitung der Engstelle in das Schwenklager des zweiten Beschlagteils eingeklickt bzw. eingerastet.

Insbesondere wenn das erste Beschlagteil einstückig aus Kunststoff gespritzt ist, ist der mindestens eine Spreizdübel durch eine geschlitzte Spreizmuffe gebildet, in die der Spreizbolzen eingeclipst ist. Alternativ kann der Spreizbolzen auch ein von Kunststoff umspritztes Einlegeteil sein.

Die Erfindung betrifft auch ein Möbelteil, insbesondere Frontblende, mit einem wie oben ausgebildeten Verbindungsbeschlag, wobei der mindestens eine Spreizdübel des Verbindungsbeschlags in eine Bohrung des Möbelteils eingesteckt und das als Halteteil ausgeführte, zweite Beschlagteil in seine Spannstellung geschwenkt ist, wodurch der Spreizdübel aufgespreizt und in der Bohrung fest verankert ist.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a, 1b: einen erfindungsgemäßen Frontblenden-Verbindungsbeschlag mit zwei Spreizdübeln, die in Fig. 1a in ihrer nicht-gespreizten Ausgangsstellung und in Fig. 1b in ihrer gespreizten Endstellung gezeigt sind, jeweils in einer perspektivischen Ansicht;
- Fign. 2a, 2b: den in Fig. 1 gezeigten Verbindungsbeschlag mit den zwei Spreizdübeln, die in Fig. 2a in ihrer nicht-gespreizten Ausgangsstellung und in Fig. 2b in ihrer gespreizten Endstellung gezeigt sind, jeweils in einer Schnittansicht durch einen der beiden Spreizdübel; und
- Fig. 3: eine Frontblendenbefestigung mit dem erfindungsgemäßen Verbindungsbeschlag.

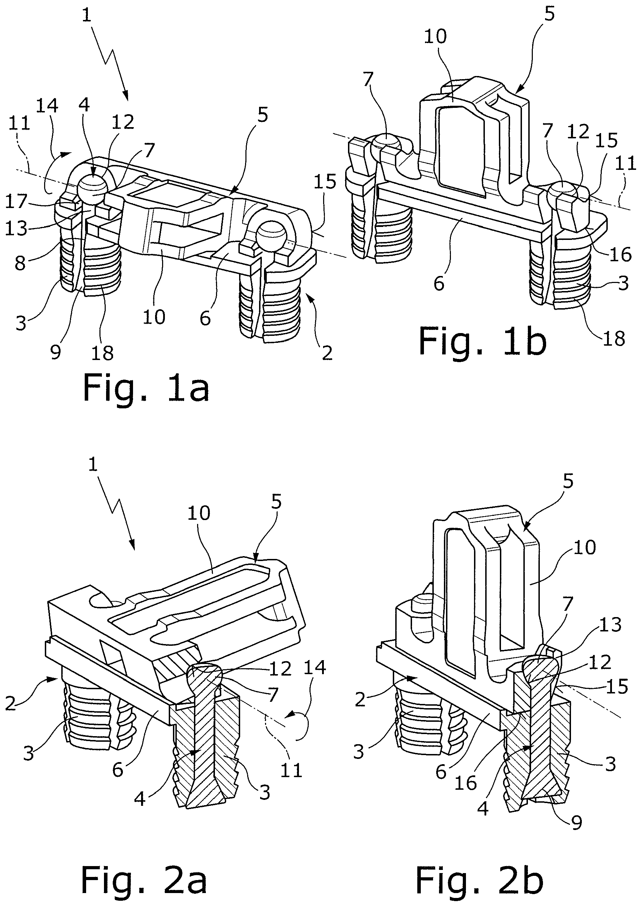

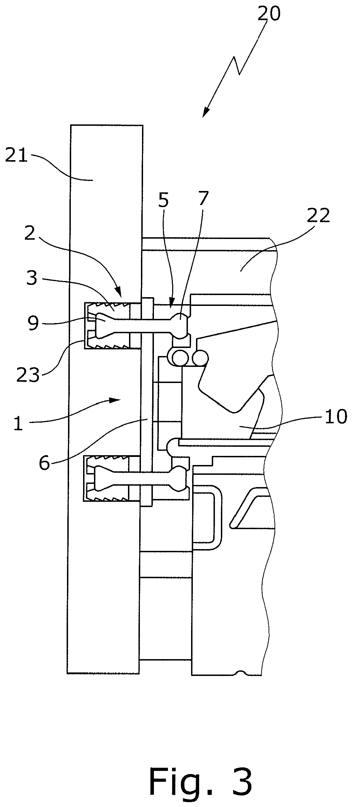

Der in **Fign. 1, 2** gezeigte Verbindungsbeschlag **1** dient zum Befestigen zweier Möbelteile, z.B. einer Frontblende **21** an einer Schubladenzarge **22** (Fig. 3).

Der Verbindungsbeschlag 1 umfasst ein an der Frontblende 21 zu befestigendes, erstes Beschlagteil **2**, das zwei parallele Spreizdübel **3** mit jeweils einem Spreizteil in Form eines Spreizbolzens **4** aufweist, und ein an der Schubladenzarge 22 zu befestigendes, zweites Beschlagteil **5**, das am ersten Beschlagteil 2 schwenkbar zwischen einer gegenüber den Spreizdübeln 3 um 90° abgewinkelten Ausgangsstellung (Fign. 1a, 2a), in welcher die Spreizbolzen 4 die Spreizdübel 3 nicht aufspreizen, und einer nicht-abgewinkelten Spannstellung (Fign. 1b, 2b), in welcher die Spreizbolzen 4 den Spreizdübel 3 aufspreizen, gelagert ist.

Die beiden Spreizdübel 3 sind über eine Platte **6** miteinander verbunden und jeweils durch eine geschlitzte Spreizmuffe gebildet, in die jeweils ein Spreizbolzen 4 eingeclipst ist. Der Spreizbolzen 4 weist einenends einen über den Spreizdübel 3 vorstehenden Bolzenkopf **7**, der auf seiner dem Bolzenschaft **8** zugewandten Kopfseite etwa halbkugelförmig ausgebildet ist, und anderenends einen Spreizkonus **9** zum Aufspreizen des Spreizdübels 3 auf. Vorzugsweise sind die Spreizdübel 3 und die Platte 6 einstückig aus Kunststoff gespritzt.

Das zweite Beschlagteil 5 ist als Exzenterhebel ausgebildet, dessen Hebelarm **10** als Halteteil einer Frontblendenbefestigung **20** (Fig. 3) ausgeführt ist, und schwenkbar auf den beiden Bolzenköpfen 7, also um eine durch die beiden Bolzenköpfe 7 gehende Achse **11**, gelagert. Dazu weist das zweite Beschlagteil 5 für jeden der beiden Bolzenköpfe 7 eine etwa viertel- bis halbkugelförmige Lagerschale (Lagerfläche) **12** mit einem für den Bolzenschaft 8 vorgesehenen, randseitig offenen Schlitz **13**, welcher sich ausgehend vom Rand der Lagerschale 12 entgegen der Spannrichtung **14** des Exzenterhebels erstreckt, sowie zu beiden Seiten des Schlitzes 13 jeweils eine bezüglich der Schwenkachse 11 bzw. zur Lagerschale 12 exzentrische Außenkontur **15** auf. Ausgehend vom randoffenen Schlitzende nimmt der Abstand der Außenkontur 15 zur Schwenkachse 11 entlang des Schlitzes 13 kontinuierlich zu, wobei die exzentrische Außenkontur 15 über eine Kante in eine ebene Anlagefläche **16** übergeht. Der Schlitz 13 hat nahe seinem randoffenen Schlitzende eine elastisch aufweitbare Engstelle **17**, deren Schlitzbreite geringfügig kleiner als der Durchmesser des Bolzenschafts 8 ist.

Beim Zusammenbau des Verbindungsbeschlags 1 wird das zweite Beschlagteil 5 mit seinen Lagerschalen 12 quer zur Schwenkachse 11 bzw. in Richtung rechtwinklig zu beiden Bolzenachsen auf die Bolzenköpfe 7 aufgesteckt und gleichzeitig die Bolzenschafte 8 in die Schlitze 13 eingeführt. Dabei wird die Engstelle 17 auf den Durchmesser des Bolzenschafts 8 elastisch aufgeweitet, bis sie hinter dem vorbeigeschobenen Bolzenschaft 8 verrastet, wodurch die beiden Beschlagteile 2, 5 unverlierbar aneinander gehalten sind (Fign. 1, 2).

In **Fig. 3** ist eine Frontblende 21 an einer Schubladenzarge 22 mithilfe eines Verbindungsbeschlags 1 befestigt. Bei der hierfür erforderlichen Montage werden zunächst die beiden Spreizdübel 3 des in der abgewinkelten Ausgangsstellung befindlichen Verbindungsbeschlags 1 in Bohrungen **23** der Frontblende 21 eingesteckt, bis das erste Beschlagteil 2 mit der Platte 6 an der Frontplatte 21 anliegt. Anschließend wird das zweite Beschlagteil 5 aus der Ausgangsstellung um 90° in Spannrichtung 14 bis in die Spannstellung geschwenkt, in der der Hebelarm 10 parallel zu den beiden Spreizdübeln 3 bzw. Bolzenachsen verläuft. Dabei bewirken die an der Platte 6 abrollenden, exzentrischen Außenkonturen 15 des zweiten Beschlagteils 5 einerseits, dass die Spreizbolzen 4 aus den in der Frontplatte 21 ortsfest gehaltenen Spreizdübeln 3 etwas herausgezogen und dadurch von den Spreizkonen 9 nach außen aufgespreizt werden, und andererseits, dass die beiden Bauteile 2, 5 aneinander festgeklemmt werden. Zusätzlich weisen die Spreizdübel 3 mehrere Umfangsrippen **18** auf, die sich beim Aufspreizen der Spreizdübel 3 in die Bohrungswandungen der Frontplatte 21 eingraben und so die Spreizdübel 3 fest in den Bohrungen 23 verankern. In der Spannstellung liegt das zweite Beschlagteil 5 mit seiner ebenen Anlagefläche 16 an der Platte 6 der Frontblende 21 an, wobei eine zwischen der exzentrischen Außenkontur 15 und der ebenen Anlagefläche 16 vorhandene Kante das zweite Beschlagteil 5 in der Spannstellung sichert. Zusätzlich kann eine Selbstsicherung des zweiten Beschlagteils 5 durch ein Überspannen kurz vor der Spannstellung erfolgen. Abschließend wird die Frontplatte 21 mithilfe des Hebelarms 10, der das Halteteil der Frontblendenbefestigung 20 ausgeführt ist, an der Schubladenzarge 22 auf an sich bekannte Weise befestigt. Statt an der Platte 6 könnten die Außenkonturen 15 auch direkt an der Frontplatte 21 abrollen.

## Patentansprüche

1. Verbindungsbeschlag (1) mit einem an einem ersten Möbelteil (21) zu befestigenden, ersten Beschlagteil (2), das mindestens einen Spreizdübel (3) mit einem Spreizbolzen (4) aufweist, und mit einem an einem zweiten Möbelteil (22) zu befestigenden, zweiten Beschlagteil (5), das am ersten Beschlagteil (2) schwenkbar zwischen einer gegenüber dem mindestens einen Spreizdübel (3) abgewinkelten Ausgangsstellung und einer nicht-abgewinkelten Spannstellung, in welcher der Spreizdübel (3) vom Spreizbolzen (4) weiter als in der Ausgangsstellung aufgespreizt ist, gelagert ist und eine bezüglich der Schwenkachse (11) exzentrische Spannkontur (15) aufweist, die mit dem ersten Beschlagteil (2) oder dem ersten Möbelteil (21) zusammenwirkt, wobei der Spreizbolzen (4) einen über den Spreizdübel (3) vorstehenden, teilkugel- oder teilzylinderförmigen Bolzenkopf (7) aufweist und dass das zweite Beschlagteil (5) auf dem mindestens einen Bolzenkopf (7) schwenkbar zwischen der Ausgangs- und der Spannstellung gelagert ist,
**dadurch gekennzeichnet,**
**dass** das zweite Beschlagteil (5) auf dem mindestens einen Bolzenkopf (7) verrastet ist.

2. Verbindungsbeschlag nach Anspruch 1, **dadurch gekennzeichnet, dass** das erste Beschlagteil (2) mindestens zwei parallele Spreizdübel (3) mit jeweils einem Spreizbolzen (4) aufweist und dass das zweite Beschlagteil (5) auf den mindestens zwei Bolzenköpfen (7) schwenkbar zwischen der Ausgangs- und der Spannstellung gelagert ist.

3. Verbindungsbeschlag nach Anspruch 1 oder 2, **dadurch gekennzeichnet, dass** der mindestens eine Bolzenkopf (7) halbkugel- oder halbzylinderförmig, ausgebildet ist.

4. Verbindungsbeschlag nach einem der vorhergehenden Ansprüche, **dadurch gekennzeichnet, dass** das zweite Beschlagteil (5) eine teilkugel- oder teilzylinderförmige Lagerfläche (12) für den mindestens einen Bolzenkopf (7) aufweist.

5. Verbindungsbeschlag nach einem der vorhergehenden Ansprüche, **dadurch gekennzeichnet, dass** die Spannkontur des zweiten Beschlagteils (5) durch eine bezüglich der Schwenkachse (11) exzentrische Außenkontur (15) oder durch eine bezüglich der Schwenkachse (11) exzentrisch ausgebildete Lagerfläche (12) gebildet ist.

6. Verbindungsbeschlag nach einem der vorhergehenden Ansprüche, **dadurch gekennzeichnet, dass** die Lagerfläche (12) einen sich in Schwenkrichtung (4) erstreckenden, randoffenen Schlitz (13) für einen Bolzenschaft (8) des Spreizbolzens (4) aufweist.

7. Verbindungsbeschlag nach Anspruch 6, **dadurch gekennzeichnet, dass** der Schlitz (13) eine elastisch aufweitbare Engstelle (17) aufweist, deren Schlitzbreite geringfügig kleiner als der Durchmesser des Bolzenschafts (8) ist.

8. Verbindungsbeschlag nach einem der vorhergehenden Ansprüche, **dadurch gekennzeichnet, dass** der mindestens eine Spreizdübel (3) durch eine geschlitzte Spreizmuffe gebildet ist, in die der Spreizbolzen (4) eingeclipst ist.

9. Verbindungsbeschlag nach einem der vorhergehenden Ansprüche, **dadurch gekennzeichnet, dass** das zweite Beschlagteil (5) als Halteteil einer Frontblendenbefestigung (20) ausgeführt ist.

10. Möbelteil (21), insbesondere Frontblende, mit einem Verbindungsbeschlag (1) nach einem der vorhergehenden Ansprüche, wobei der mindestens eine Spreizdübel (3) des Verbindungsbeschlags (1) in eine Bohrung (23) des Möbelteils (21) eingesteckt und das als Halteteil ausgeführte, zweite Beschlagteil (5) in seine Spannstellung geschwenkt ist.

## Claims

1. Connecting fitting (1) comprising a first fitting part (2), which is to be fixed to a first furniture part (21) and has at least one expansion anchor (3) with an expansion bolt (4), and comprising a second fitting part (5), which is to be fixed to a second furniture part (22) and is supported on the first fitting part (2) such that it can be pivoted between an initial position, which is angled with respect to the at least one expansion anchor (3), and a non-angled clamping position, in which the expansion anchor (3) is expanded further by the expansion bolt (4) than in the initial position and has an eccentric clamping contour (15) with respect to the pivot axis (11), which cooperates with the first fitting part (2) or the first furniture part (21), wherein the expansion bolt (4) comprises a bolt head (7) which has a partially spherical or partially cylindrical shape and protrudes past the expansion anchor (3), and wherein the second fitting part (5) is supported on the at least one bolt head (7) such that it is pivotable between the initial position and the clamping position,
**characterized in that**
the second fitting part (5) is locked on the at least one bolt head (7).

2. Connecting fitting according to claim 1, **characterized in that** the first fitting part (2) comprises at least two parallel expansion anchors (3) with one expansion bolt (4) each and that the second fitting part (5) is supported on the at least two bolt heads (7) such that it can be pivoted between the initial position and the clamping position.

3. Connecting fitting according to claim 1 or 2, **characterized in that** the at least one bolt head (7) has a semi-spherical or semi-cylindrical shape.

4. Connecting fitting according to any one of the preceding claims, **characterized in that** the second fitting part (5) comprises a partially-spherically shaped or partially cylindrically-shaped bearing surface (12) for the at least one bolt head (7).

5. Connecting fitting according to any one of the preceding claims, **characterized in that** the clamping contour of the second fitting part (5) is formed by an outer contour (15) which is eccentric with respect to the pivot axis (11) or by a bearing surface (12) which is eccentric with respect to the pivot axis (11).

6. Connecting fitting according to any one of the preceding claims, **characterized in that** the bearing surface (12) has an open-edged slot (13), which extends in the pivot direction (4), for a bolt shaft (8) of the expansion bolt (4).

7. Connecting fitting according to claim 6, **characterized in that** the slot (13) has an elastically expandable constriction (17), the slot width of which is slightly smaller than the diameter of the bolt shaft (8).

8. Connecting fitting according to any one of the preceding claims, **characterized in that** the at least one expansion anchor (3) is formed by a slotted expanding sleeve into which the expansion bolt (4) is clipped.

9. Connecting fitting according to any one of the preceding claims, **characterized in that** the second fitting part (5) is designed as a holding part of a front panel mounting (20).

10. Furniture part (21), in particular front panel, comprising a connecting fitting (1) according to any one of the preceding claims, wherein the at least one expansion anchor (3) of the connecting fitting (1) is inserted into a bore (23) of the furniture part (21) and the second fitting part (5), which is designed as holding part, is pivoted into its clamping position.

## Revendications

1. Ferrure de liaison (1) comprenant une première partie (2) réalisée pour être fixée à une première partie (21) de meuble, et munie d'au moins une cheville expansible (3) dotée d'un goujon d'écartement (4), et une seconde partie (5) qui est réalisée pour être fixée à une seconde partie (22) de meuble ; est montée, sur ladite première partie (2) de la ferrure, avec faculté de pivotement entre une position de départ inclinée par rapport à la cheville expansible (3) à présence minimale, et une position de serrage non inclinée dans laquelle ladite cheville expansible (3) est déployée plus fortement que dans la position de départ, sous l'action dudit goujon d'écartement (4) ; et est pourvue d'un profil de serrage (15) excentré vis-à-vis de l'axe de pivotement (11) et coopérant avec ladite première partie (2) de la ferrure ou avec ladite première partie (21) du meuble, sachant que ledit goujon d'écartement (4) comporte une tête (7) de forme partiellement sphérique ou partiellement cylindrique, faisant saillie au-delà de ladite cheville expansible (3), et que ladite seconde partie (5) de la ferrure est montée, sur ladite tête (7) à présence minimale sur le goujon, avec faculté de pivotement entre les positions de départ et de serrage, **caractérisée par le fait**
**que** la seconde partie (5) de ladite ferrure est encliquetée sur la tête (7) du goujon, à présence minimale.

2. Ferrure de liaison selon la revendication 1, **caractérisée par le fait que** la première partie (2) de ladite ferrure compte au moins deux chevilles expansibles parallèles (3), respectivement dotées d'un goujon d'écartement (4) ; et **par le fait que** la seconde partie (5) de ladite ferrure est montée, sur les deux têtes (7) à présence minimale sur les goujons, avec faculté de pivotement entre les positions de départ et de serrage.

3. Ferrure de liaison selon la revendication 1 ou 2, **caractérisée par le fait que** la tête (7), à présence minimale sur le goujon, est réalisée avec configuration hémisphérique ou semi-cylindrique.

4. Ferrure de liaison selon l'une des revendications précédentes, **caractérisée par le fait que** la seconde partie (5) de ladite ferrure est munie d'une surface de montage (12) de forme partiellement sphérique ou partiellement cylindrique, dévolue à la tête (7) à présence minimale sur le goujon.

5. Ferrure de liaison selon l'une des revendications précédentes, **caractérisée par le fait que** le profil de serrage de la seconde partie (5) de ladite ferrure est matérialisé par un profil extérieur (15) excentré vis-à-vis de l'axe de pivotement (11), ou par une surface de montage (12) de réalisation excentrée par rapport audit axe de pivotement (11).

6. Ferrure de liaison selon l'une des revendications précédentes, **caractérisée par le fait que** la surface de montage (12) comporte une fente (13) à bord ouvert, s'étendant dans la direction (4) du pivotement et dédiée à une tige (8) du goujon d'écartement (4).

7. Ferrure de liaison selon la revendication 6, **caractérisée par le fait que** la fente (13) présente une zone resserrée (17) pouvant être élargie élastiquement, dont la largeur interstitielle est légèrement inférieure au diamètre de la tige (8) du goujon.

8. Ferrure de liaison selon l'une des revendications précédentes, **caractérisée par le fait que** la cheville expansible (3), à présence minimale, est constituée d'un manchon expansible fendu dans lequel le goujon d'écartement (4) est clipsé.

9. Ferrure de liaison selon l'une des revendications précédentes, **caractérisée par le fait que** la seconde partie (5) de ladite ferrure est réalisée en tant que pièce de retenue d'une fixation (20) de panneau frontal.

10. Partie (21) de meuble, notamment panneau frontal comportant une ferrure de liaison (1) conforme à l'une des revendications précédentes, sachant que la cheville expansible (3), à présence minimale dans ladite ferrure de liaison (1), est emboîtée dans un perçage (23) de ladite partie (21) du meuble et sachant que la seconde partie (5) de ladite ferrure, réalisée en tant que pièce de retenue, est amenée à sa position de serrage sous l'effet d'un pivotement.
